(19) Europäisches Patentamt
European Patent Office
Office européen des brevets

(11) Publication number: 0 191 548 B1

(12) **EUROPEAN PATENT SPECIFICATION**

(45) Date of publication of patent specification: **24.03.93**

(51) Int. Cl.5: **C08L 77/00**, C08L 77/06, //C08L23:16,C08L23:08

(21) Application number: **86300189.7**

(22) Date of filing: **14.01.86**

The file contains technical information submitted after the application was filed and not included in this specification

# (54) High impact resistant polyamide.

(30) Priority: **15.01.85 US 691575**
**27.03.85 US 716692**

(43) Date of publication of application:
**20.08.86 Bulletin 86/34**

(45) Publication of the grant of the patent:
**24.03.93 Bulletin 93/12**

(84) Designated Contracting States:
**BE CH DE FR GB IT LI NL**

(56) References cited:
**EP-A- 0 072 480**
**EP-A- 0 156 523**
**US-A- 4 174 358**

(73) Proprietor: **E.I. DU PONT DE NEMOURS AND COMPANY**
**1007 Market Street**
**Wilmington Delaware 19898(US)**

(72) Inventor: **Dunphy, James Francis**
**233 North Hills Drive**
**Parkersburg West Virginia 26101(US)**

(74) Representative: **Jones, Alan John et al**
**CARPMAELS & RANSFORD 43 Bloomsbury Square**
**London, WC1A 2RA (GB)**

EP 0 191 548 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention relates to polyamide resins that have high impact resistance at low temperatures. More particularly, this invention relates to amorphous polyamides that contain at least a particular amount of dispersed toughener particles of two particular groups of chemical compositions and have a particle size of less than about 360 nm as determined by the small angle X-ray scattering technique disclosed.

### BACKGROUND

Toughened nylon compositions are commercial high volume products. Such compositions contain a continuous nylon phase and a dispersed toughener phase. Such compositions are disclosed in Epstein, U.S. Patent 4,174,358 dated November 13, 1979.

The present invention is an improvement over the compositions disclosed in the Epstein patent, in that it has been found that certain amorphous nylons, when toughened with a combination of certain specific tougheners, in certain specific amounts, and the tougheners exist in the amorphous nylon as particles having a particle size of less than about 360 nm, yield fabricated parts having higher impact resistance at room temperature than those previously known.

EP-A3-0156523 published after the priority date of the claims of this application discloses high impact resistant polyamide resins containing an amorphous polyamide and as a toughener dispersed particles of EPDM copolymer grafted with succinic anhydride. EP-A3-0072480 discloses a high impact composition comprising a polyamide, an ethylene ionomer resin and an elastomeric ethylene copolymer in specified proportions.

### SUMMARY OF THE INVENTION

The present invention is a thermoplastic composition comprising an amorphous polyamide matrix resin and a blend of ionomer and copolymer particles dispersed in the polyamide matrix resin. The polyamide must be of high molecular weight and have an apparent melt viscosity of 3000 poise or more, when measured on a sample that contains no more than 0.15% by weight water, the measurement being made at 280°C and at a shear rate of 100 $sec^{-1}$. The amorphous polyamide must be present in the composition in the amount of 75% to 85% by weight of the composition. The blend of ionomer and copolymer particles that are dispersed (substantially uniformly throughout the amorphous polyamide) have a particle size such that when the small angle X-ray procedure described herein is applied to a sample of the polymer a particle diameter less than about 360 nm is obtained. The implications of the procedure are that this represents a log-normal distribution where one-half the mass of the particles have a diameter less than about 360 nm. The copolymer in the copolymer particles has a Mooney viscosity of between 40 to 60. The composition of the copolymer particles is either (1) 63 to 73% by weight units derived from ethylene, 24 to 30% by weight units derived from propylene, 3.0 to 6.5% by weight units derived from hexadiene, and 0 to 0.536 by weight units derived from norbornadiene containing succinic anhydride groups grafted thereto in the amount of 0.25 to 2.25% by weight of the copolymer, or (2) mixtures of at least 35 weight percent (1) and up to 65 weight percent of the copolymers of (1) which do not have succinic anhydride groups grafted thereto. The copolymer is present in the composition in the amount of from 4 to 20% by weight of the composition. The ionomers useful in the present invention are terpolymers consisting of from 40 to 93 wt. % units derived from ethylene, at least 5 wt. % of units derived from an acrylate of the formula

$$CH_2{=}\overset{\overset{R'}{|}}{C}H\overset{\overset{O}{\|}}{C}O{-}R$$

wherein -R is an alkyl group containing 2 to 10 carbon atoms, -R' is -H or $-CH_3$ and from 2 to 20 wt. % of units derived from acrylic acid or methacrylic acid. The preferred ionomers contain from 70 to 85 wt. % ethylene units, 10 to 20 wt. % of the above defined acrylate units and 5 to 15 wt. % acrylic acid or methacrylic acid units. The ionomer particles are present in the amount of from 5 to 21% by weight of the composition. The copolymer and ionomer particles in some of the compositions of the invention are present in amounts such that their weight plus the weight of the amorphous polyamide polymer combine to make

100% of the thermoplastic components of the compositions of the invention. The compositions of the invention may contain various fillers, reinforcing ingredients such as glass fibers, pigments, stabilizers, mold release agents, antistatic agents and the like all of which are known to those skilled in the art.

## DETAILED DESCRIPTION

The thermoplastic amorphous polyamides may be obtained from at least one aromatic dicarboxylic acid containing 8-18 carbon atoms and at least one diamine selected from the class consisting of (i) 4-12 carbon normal aliphatic straight-chained diamine, and (ii) 8-20 carbon cycloaliphatic diamines containing at least one cycloaliphatic ring.

Preferred diacids are isophthalic and terephthalic acids. Especially preferred are mixtures containing 60 to 70 mole % isophthalic acid and 40 to 30 mole % terephthalic acid.

Preferred diamines are hexamethylenediamine and bis(p-aminocyclohexyl) methane (PACM, hereinafter). PACM is available as a mixture of three stereoisomers - cis, cis; cis, trans; and trans, trans. Any isomer mixture can be used. Especially preferred are mixtures containing up to 10 mole % PACM isomers and 90 to 100 mole % hexamethylenediamine, in particular mixtures containing 2 to 10 mole percent of PACM isomers and 90 to 98 mole percent of hexamethylene diamine.

Amorphous polyamides prepared from the especially preferred mixtures of diacids and the especially preferred mixtures of diamines have glass transition temperatures above 120°C.

Amorphous polyamides will generally have no distinct melting point and a heat of fusion of less than 1 cal/gram. The heat of fusion is conveniently determined by use of a differential scanning calorimeter (DSC). A suitable calorimeter is The Du Pont Company's 990 thermal analyzer, Part No. 990000 with cell base II, Part No. 990315, and DSC cell, Part No. 900600. With this instrument, heat of fusion can be measured at a heating rate of 20°C per minute. The sample is alternately heated to a temperature above the anticipated melting point and cooled rapidly by cooling the sample jacket with liquid nitrogen. The heat of fusion is determined on any heating cycle after the first and should be a constant value, within experimental error.

The apparent melt viscosity of the polyamides at 280°C was determined by standard techniques with a capillary rheometer (typically with 0.52 mm-0.0205 inch orifice diameter, 14.68/l L/D ratio, and 9.5 mm-0.3747 inch piston diameter).

The toughened products claimed in this patent may be obtained from amorphous polyamides with an apparent melt viscosity of 3000 poise (300 $Ns/m^2$) or more at 280°C and a shear rate of 100 $sec^{-1}$ when the polyamides contain 0.15% or less water.

The toughened products of this invention may be obtained from amorphous polyamides with quite high melt viscosity, for example, a melt viscosity of 20,000 poise (2000 $Ns/m^2$) at 280°C, 100 $sec^{-1}$ shear rate, and 0.05% water. The upper limit of the polyamide melt viscosity is dictated by the ability of the final processing equipment to fabricate articles from high viscosity melts. Those skilled in the art will recognize that materials with comparatively high melt viscosity are desirable in extrusion and blow molding applications while products with lower melt viscosities might be desirable for the injection molding of complicated parts.

The copolymers present in the dispersed particles in the composition of the present invention are either (1) copolymers containing 63 to 73% by weight units derived from ethylene, 24 to 30% by weight units derived from propylene, 3.0 to 6.5% by weight units derived from hexadiene, and 0 to 0.536% by weight units derived from norbornadiene having a Mooney viscosity of 40 to 60, and grafted with succinic anhydride groups so that the copolymer contains 1.5 to 2.0% by weight succinic anhydride groups, or (2) mixtures of (1) with ungrafted copolymers of (1), such mixtures containing at least about 35% by weight of (1). Processes for the preparation of such grafted copolymers are known in the art. A suitable process is disclosed in Caywood, U.S. Patent 3,884,882.

The ionomers useful in the present invention are terpolymers containing from 40 to 93 wt. % units derived from ethylene, from 5 to 60 wt. % of units derived from an acrylate of the formula

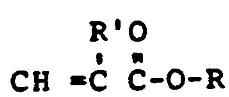

wherein -R is an alkyl group containing 2 to 10 carbon atoms, -R' is -H or $-CH_3$ and from 2 to 20 wt. % acrylic acid or methacrylic acid. The acid groups are from 0 to 100% neutralized with metal ions, and hence the term "ionomer" includes neutralised and unneutralised terpolymers. The preferred metal ions are $Zn^{++}$, $Mg^{++}$, $Al^{+++}$, $Ca^{++}$, $K^{+}$, $Na^{+}$ and $Li^{+}$. Especially preferred is $Zn^{++}$ or $Zn^{++}$ containing up to 50% based on

$Zn^{++}$ of $Na^{+}$. The base terpolymer prior to neutralization with metal ions should have a melt index of 1.0 to 100g/10 min. as determined by ASTM-D-1238-52T. The ionomers are prepared as described in Rees U.S. 3,264,272. The ionomer particles generally will comprise from 5 to 21% by weight of the composition.

The compositions of this invention may be prepared by mixing preweighed, blended quantities of the amorphous polyamides the ionomer and the copolymers (tougheners) in the molten state under high shear. Such mixing can be accomplished in commercially available equipment such as a 53 mm twin-screw extruder manufactured by Werner & Pfleiderer Corporation. A satisfactory screw design for an 1860 mm long screw includes mixing elements 750 mm and 1390 mm from the feed end of the screw. Barrel heaters may be set at 260-275°C. A vacuum port may be used near the die. Screw speeds of 200-250 rpm and extrusion rates of 120-230 pph afford the compositions of this invention with melt temperatures of 310 to 340°C measured on the molten strand exiting the die. The strands are quenched in water and pelletized. The pellets are dried to a moisture content of 0.15% by weight or less prior to final processing (e.g., injection molding, blow molding, extrusion).

The copolymer and ionomer particles in the compositions of this invention must have a particle size such that when the small angle x-ray procedure described herein is applied to a sample of the polymer a particle diameter less than about 360 nm is obtained. The implications of the procedure are that this represents a log-normal distribution where one-half the mass of the particles have a diameter less than about 360 nm. The particle size distribution in the compositions of the invention is affected by the following factors: the viscosity of the polyamide, the viscosity of the copolymer, the amount of shear applied in mixing the polyamide and the copolymer, and the mixing temperature. Thus, by using a high viscosity polyamide, low viscosity copolymer and ionomer coupled with a large amount of shear during mixing and a low mixing temperature, the desired particle size distribution can be readily achieved.

The concentrations for the ingredients in toughened amorphous polyamides are from 4-20 weight % copolymer 5-21 weight % ionomer (tougheners) and 85-75 weight % amorphous polyamide. Lower concentrations of the copolymer and ionomer (tougheners) afford products with inadequate low temperature toughness. Higher loadings of copolymer and ionomer (toughener) give products with inadequate tensile strength and stiffness for most uses.

Especially preferred concentrations of the ingredients in the toughened products are 8-12 weight % copolymer 6-12 weight % ionomer (tougheners) and 85-78 weight % amorphous polyamide.

The particle size is determined by small-angle x-ray scattering, according to the following technique: The small-angle x-ray scattering (SAXS) data should be acquired on a high-resolution instrument such as the one originally designed by Bonse and Hart Zeit. fur Physik, 189, 151 (1966), and subsequently manufactured commercially by Advanced Metals Research Corporation, Burlington, Massachusetts, as the AMR Model 6-220 X-Ray Low Angle Scattering Goniometer. A suitable sample of amorphous polyamide containing dispersed copolymer particles consists of a molding (generally an injection-molded tensile or flex bar) of such thickness as to transmit about 1/e (1/2.71828 or 0.368) of a CuKα (wavelength = 0.1542 nm) x-ray beam. This is the optimum thickness for transmission data (data acquired when the x-ray beam passes through the thickness of the sample along the surface normal), and is generally of the order of 80 mils (0.08 inches or about 2 mm) for a typical sample. A typical molding is usually too thick (1/8 inch-3 mm or greater) but can be thinned by sawing or milling.

Scattered x-ray intensity data are acquired in the range from 8 to 600 seconds of arc (2-theta). The AMR instrument is calibrated in seconds; this corresponds to 0.002° to 0.16° or $4 \times 10^{-5}$ to $3 \times 10^{-3}$ radians. Appropriate step sizes range upwards from 2 seconds of arc as the scattering angle increases; 20 points each at step-sizes of 2, 4, 8, and 16 seconds will cover the angular range in 81 points. These are "slit-smeared" results, and, after smoothing and subtraction of instrumental background, should be "desmeared" before interpretation. For this work, the data are desmeared by the method of Schmidt and Hight, Acta Cryst., 13,480 (1960); P. W. Schmidt, Acta Cryst., 19,938 (1965) to cover the range from 0.005° to 0.07° 2-theta. (The experimental angular range from 0.07° to 0.16° of the observed data is required only to desmear the retained results below 0.07°). The desmeared intensity results can be represented as I(h), where

$$h = \frac{4\pi \sin\theta}{\lambda} = k \times 2\theta.$$

Here, $\theta = (2\theta)/2$ (and $\sin\theta$) = $\theta$ in radians at these small angles) and λ = the wavelength of CUKα radiation. These intensity results are converted to the "Invariant" argument, $h^2$ I(h), by multiplying each desmeared intensity by the square of the angle of observation for that point.

A plot of the invariant argument will be characterized by having a maximum at an angle below 0.04° 2-theta if the dispersed particles causing the scattering have diameters of the order of hundreds of nanometers. If the particle-size distribution is narrow (nearly monodisperse), the particle diameter is inversely proportional to the position of this maximum: diameter = $4.87/2\theta°_{max}$ nm. If there is finite breadth to the distribution, the peak position will be shifted to lower angles and the breadth of the distribution must be taken into account. For the results cited here, the observed invariant-argument curves were matched to calculated curves derived assuming a model of a log-normal particle-size distribution. For typical distributions, the most probable particle size is of the order of 2/3 to 3/4 that calculated on the basis of the peak position of the invariant argument alone.

In order to characterize a particle-size distribution in the manner employed here, two measurements are made on the invariant-argument curve. The angular position (2-theta), $h_m$, of the maximum is determined and the angular position of the "half-height" $h_\lambda$, is determined. The half-height is that point on the invariant-argument curve which has an ordinate one-half that of the maximum and is on the high-angle side of the maximum. Given a log-normal model, the breadth of the distribution, expressed in relative terms, is a function only of the ratio, $R_h$, of these two angles: $R_h = h_h/h_m$. ($R_h$ should have a value greater than about 1.57. If it is significantly less than this, the position of the maximum of the curve has probably been displaced to higher angles by interparticle interference arising from close, regular packing of the particles.)

A log-normal distribution can be characterized by $R_S$, the ratio of the size at one-sigma of the distribution to the size at the center. For this work, an expression for $R_S$ was determined from $R_h$ , by a third order polynomial regression fit to computer-generated data. This equation is: $R_S = 1.19056 + 1.84535R_h - 0.33524R_h{}^2 + 0.030186R_h{}^3$ (Note that when $R_h = 1.5728+$, $R_s = 1.00$ and the distribution is monodisperse. An $R_s$ of less than 1.0 has no physical meaning.)

For each distribution ratio, $R_S$ , there is a factor, F, which can be used to correct the apparent size derived from the position of the invariant maximum corresponding to a monodisperse "distribution". Again, a third order polynomial fit was determined from a computer-generated model: $F = 1.48725 - 0.42839R_S - 0.062415R_S{}^2 + 0.022482R_S{}^3$.

The scattering curve from monodisperse spherical particles can be approximated at very low angles by

$$I(h) = K \exp(-h^2 R_o^2)/3.$$

(See A. Guinier & G. Fournet, Small-Angle Scattering of X-Rays, John Wiley & Sons, Inc., New York (1955) page 25), where $R_o$ is the radius of gyration. The invariant argument is then k $h^2 \exp(-h^2R_o{}^2)/3$. From the differentiation of this expression, the condition for the maximum, $h_m$, is:

$$h_m^2 R_o{}^2/3 = 1$$

or $R_o = \sqrt{3/h_m}$.

Substituting for $h_m = (2\pi \cdot 2\theta_m)/\lambda$, $R = \sqrt{3}\lambda/2\pi\, 2\theta_m$ where $\lambda$ (CuK$\alpha$) = 0.15418 nm, $R_o = 0.042502/2\theta_{max}$ if $2\theta$ is in radians, $R_o = 2.4352/2\theta_{max}$ if $2\theta$ is in degrees. For the approximation used in this work, the exponential (Gaussian) fit does not extend to angles as high as represented by the maximum of the invariant argument, and a better approximation is given by: $R_o = 2.182/2\theta_{max}$ where $2\theta$ is in degrees. Since the diameter of a sphere, D, as a function of the radius of gyration, $R_o$, is: $D = 2\sqrt{5/3}\,\overline{R_o}$, then $D_m$ (nm) = $5.6339/2\theta_{max}$ (deg) $D_m$ is the diameter of a particle in a monodisperse "distribution", where all the particles are the same size. When there is a finite distribution of sizes modeled as described above, then the characteristic diameter, $D_c$, is derived from $D_m$ as: $D_c = F * D_m$.

In the compounds of the present invention the characteristic diameter, $D_c$ , is no greater than about 360 nm.

The composition of the invention may be fabricated into high impact parts such as automobile body parts, for example bumpers, fender extensions and the like by injection molding, blow molding, extrusion and other similar techniques.

The composition of the invention include blends of two or more different amorphous polyamides or blends of crystalline polyamide and amorphous polyamide with the tougheners disclosed.

In the Examples which follow yield strength and elongation at break were determined according to ASTM D-638. Flexural modulus was determined (1/4-inch - .64 cm specimens) according to ASTM D-790. Notched Izod impact (1/4-inch - .64 cm specimens) was determined according to ASTM D-256. The type of specimen break is noted in the examples and conforms to definitions in ASTM D-256, namely:

C = complete break - wherein the specimen separates into two or more pieces
P = partial break - an incomplete break that is not a hinge break but has fractured at least 90 percent of the distance between the vertex of the notch and the opposite side
N = non-break - an incomplete break where the fracture extends less than 90 percent of the distance between the vertex of the notch and the opposite side
M = mixed breaks - some of the samples have complete breaks and some of the samples have partial breaks.

The amorphous nylons containing tougheners were tested dry-as-molded (DAM in Table I).

## EXAMPLES 1-14

The polyamide used in the Examples 1-6 reported in Table 1, contains 66.8% by weight of polyamide units derived from hexamethylenediaminediamine isophthalamide, 28.6% by weight of polyamide units derived from hexamethylene diamine terephthalamide, 3.2% by weight polyamide units of polyamide derived from bis(para-aminocyclohexyl) methane isophthalamide, and 1.4% by weight polyamide units derived from bis(para-aminocyclohexyl) methane terephthalamide.

The polyamide used in Examples 7-14 is a copolymer of isophthalic acid, terephthalic acid and hexamethylene diamine wherein the isophthalic acid and terephthalic acid are present in a weight/weight ratio of 65/35. In addition to the polyamide and the amounts of ionomer and copolymer reported in Table I these compositions contain minor amounts of zinc stearate and Irganox® 1098 a heat stabilizer.

Copolymer 1 used in the examples is a copolymer of propylene 27±1.5% by weight, hexadiene 3.6-4.4% by weight, and norbornadiene 0.2% by weight and the remainder ethylene, with a Mooney viscosity of 48 by ASTM D-1646 ML 2+10 at 121°C grafted with fumaric acid to contain 1.5 to 2.0% by weight succinic anhydride. Copolymer 2 is copolymer 1 without the succinic anhydride.

The ionomer used in Examples 1-9, 13 and 14 contained 80 wt. % units derived from ethylene, 10 wt. % units derived from isobutylacrylate and 10 wt. % units derived from methacrylic acid. The ionomer's acid groups were 72% neutralized using zinc metal. The ionomer had a melt index of 35 g/10 min. before neutralization and ca. 1 after neutralization.

The ionomer used in Example 12 contained 23 wt. % units derived from n-butyl acrylate, 8.6 wt. % units derived from methacrylic acid, and 70.4 wt. % units derived from ethylene. The ionomer's acid groups were 75-80% neutralized using zinc metal. The ionomer had a melt index of 2299/10 min. before neutralization and 0.8 g/10 min. after neutralization.

Examples 10 and 11 are controls showing the poorer impact resistance when only the elastomer rather than a combination of elastomer and ionomer is used in the composition.

All of the composition of Examples 1-14 were prepared under generally similar conditions within the scope outlined above. Table 2 sets forth the particular extrusion conditions for Examples 1, 2, 3, 7 and 8.

TABLE I

| Example | 1 | 2 | 3 | 4 | 5 | 6 |
|---|---|---|---|---|---|---|
| Ionomer % | 7.6 | 9.7 | 11.8 | 3.8 | 7.6 | 11.8 |
| Copolymer 1 % | 8.4 | 6.3 | 4.2 | 8.4 | 8.4 | 4.2 |
| Copolymer 2 % | | | | 3.8 | | |
| Tensile Strength, psi, DAM | 10100 (69.6 MPa) | 11400 (78.6 MPa) | 10600 (73.1 MPa) | | | |
| Elongation, %, DAM | 237 | 250 | 250 | | | |
| Flex. Modulus, kpsi, DAM | 311 (2.1 GPa) | 315 (2.2 GPa) | 328 (2.3 GPa) | | | |
| Notched Izod, ft-lb/in, 23°C, 1/4"* bar (kg-cm/cm) | 23.6N[(1)] (128) | 26.2N (143) | 26.7N (145) | 18.4N (100) | 20.9N (114) | 24.4N (133) |
| Notched Izod, ft-lb/in, 0°C, 1/4"* bar (kg-cm/cm) | 19.4N (106) | 19.4N (106) | 17.9P (97) | 15.0P (82) | 15.8P (86) | 7.3C (40) |
| Notched Izod, ft-lb/in, -10°C, 1/4"* bar (kg-cm/cm) | 16.3P (89) | 7.6C (41) | 6.3C (34) | | | |
| Notched Izod, ft-lb/in, -20°C, 1/4"* bar (kg-cm/cm) | 7.2C (39) | 6.3C (34) | 5.3C (29) | | | |
| Rockwell Hardness, DAM | 114 | 116 | 117 | | | |
| Mold Shrinkage, %, 1/8"†/1/4"* | 0.5/0.9 | 0.7/1.0 | 0.5/0.8 | | | |
| Specific Gravity | 1.12 | 1.13 | 1.13 | | | |
| Melt Flow Rate, g/10 min, 280°C | 1.9 | 2.8 | 3.1 | | | |
| Toughener Particle size nm | 312 | 290 | 304 | 231 | 197 | 200 |

Notes: (1) N = no break; P = partial break; C = complete (brittle) break; M = mixed break

* 0.635 cm
† 0.3175 cm

TABLE I (continued)

| Example | 7 | 8 | 9 |
|---|---|---|---|
| Ionomer % | 10 | 10 | 10 |
| Copolymer 1 % | 10 | 12 | 10 |
| Copolymer 2 % | | | |
| Tensile Strength, psi, DAM | 8600 (59 MPa) | 8410 (58 MPa) | 8270 (57 MPa) |
| Elongation, %, DAM | 40 | 126 | 122 |
| Flex. Modulus, kpsi, DAM | 250 (1.72 GPa) | 240 (1.65 GPa) | 240 (1.65 GPa) |
| Notched Izod, ft-lb/in, 23°C, 1/4"* bar (kg-cm/cm) | 23.2P (126) | 23.1P (126) | 24.1P (131) |
| Notched Izod, ft-lb/in, 0°C, 1/4"* bar (kg-cm/cm) | 20.8P (113) | 20.4P (111) | 22.2P (121) |
| Notched Izod, ft-lb/in, -10°C, 1/4"* bar (kg-cm/cm) | 19.2P (105) | 20.2P (110) | 20.2P (110) |
| Notched Izod, ft-lb/in, -20°C, 1/4"* bar (kg-cm/cm) | 15.0P (82) | 17.2P (94) | 13.1M (71) |
| Rockwell Hardness, DAM | - | | |
| Mold Shrinkage, %, 1/8"†/1/4"* | - | - | - |
| Specific Gravity | 1.113 | 1.1108 | 1.109 |
| Melt Flow Rate, g/10 min, 280°C | | | |
| Toughener Particle size | 288 | 236 | 236 |

Notes: (1) N = no break; P = partial break; C = complete (brittle) break;
M = mixed break

* 0.635 cm

† 0.3175 cm

TABLE I (continued)

| Example | 10 | 11 | 12 |
|---|---|---|---|
| Ionomer % | | | 10 |
| Copolymer 1 % | 25 | 10 | 12 |
| Copolymer 2 % | | 12 | |
| Tensile Strength, psi, DAM | 7780 (53.6 MPa) | 8120 (56 MPa) | 8350 (57.6 MPa) |
| Elongation, %, DAM | 45 | 154 | 131 |
| Flex. Modulus, kpsi, DAM | 210 (1.45 GPa) | 220 (1.52 GPa) | 240 (1.65 GPa) |
| Notched Izod, ft-lb/in, 23°C, 1/4"* bar (kg-cm/cm) | 16.0P (87) | 18.4P (100) | 21.5P (117) |
| Notched Izod, ft-lb/in, 0°C, 1/4" bar (kg-cm/cm) | 16.3P (89) | 17.4P (95) | 20.9P (114) |
| Notched Izod, ft-lb/in, -10°C, 1/4"* bar (kg-cm/cm) | 15.8P (86) | 17.2P (94) | 19.6P (107) |
| Notched Izod, ft-lb/in, -20°C, 1/4"* bar (kg-cm/cm) | 14.7P (80) | 14.7P (80) | 17.1P (93) |
| Rockwell Hardness, DAM | - | - | - |
| Mold Shrinkage, %, 1/8"†/1/4"* | - | - | - |
| Specific Gravity | - | - | - |
| Melt Flow Rate, g/10 min, 280°C | | | |
| Toughener Particle size | | | |

Notes: (1) N = no break; P = partial break; C = complete (brittle) break;
M = mixed break

* 0.635 cm

† 0.3175 cm

TABLE I (continued)

| Example | 13 | 14 |
|---|---|---|
| Ionomer % | 10 | 12 |
| Copolymer 1 % | 12 | 10 |
| Copolymer 2 % | | |
| Tensile Strength, psi, DAM | 8410 (58 MPa) | 8270 (57.0 MPa) |
| Elongation, %, DAM | 126 | 122 |
| Flex. Modulus, kpsi, DAM | 240 (1.7 GPa) | 240 (1.7 GPa) |
| Notched Izod, ft-lb/in, 23°C, 1/4"* bar (kg-cm/cm) | 23.1P (126) | 24.1P (131) |
| Notched Izod, ft-lb/in, 0°C, 1/4"* bar (kg-cm/cm) | 20.4P (111) | 22.2P (121) |
| Notched Izod, ft-lb/in, -10°C, 1/4"* bar (kg-cm/cm) | 20.2P (110) | 20.7P (113) |
| Notched Izod, ft-lb/in, -20°C, 1/4"* bar (kg-cm/cm) | 17.8P (97) | 13.8P (75) |
| Rockwell Hardness, DAM | - | - |
| Mold Shrinkage, %, 1/8"†/1/4"* | - | - |
| Specific Gravity | - | - |
| Melt Flow Rate, g/10 min, 280°C | | |
| Toughener Particle size | | |

Notes: (1) N = no break; P = partial break; C = complete (brittle) break;
M = mixed break

* 0.635 cm

† 0.3175 cm

TABLE 2

| EXTRUSION CONDITIONS | | | | | |
|---|---|---|---|---|---|
| Example Number | 1 | 2 | 3 | 7 | 8 |
| Screw Speed, rpm | 235 | 245 | 245 | 225 | 230 |
| Melt Temp., °C | 321 | - | 322 | 343 | 339 |
| Extruder Vacuum, inches Hg (kN/m$^2$) | 25 (84.7) | 25 (84.7) | 25 (84.7) | 12.5 (42.3) | 13 (44.0) |
| Melt Pressure at Die, psi (kPa) | | | | 800 (5516) | 860 (5930) |
| Extrusion Rate, pph | 206 | - | 223 | 248 | 252 |

## Claims

1. A thermoplastic composition having high impact resistance, said composition comprising a polyamide matrix resin which comprises an amorphous polyamide, said polyamide having an apparent melt viscosity of 300 Ns/m$^2$ (3000 poise) or more when measured at 280°C at a shear rate of 100 sec$^{-1}$, said polyamide being present in the composition in the amount of 75 to 85% by weight of the composition, and at least 15% by weight of the composition of toughener particles that are dispersed in said polyamide matrix resin, said toughener particles having a particle size, as determined by small angle x-ray scattering, of less than about 360 nm, said toughener particles being formed from 5 to 21 weight percent, based on the thermoplastic composition, of (a) an ionomer terpolymer consisting of from 40 to 93 weight percent units derived from ethylene, from at least 5 weight percent of units derived from an acrylate of the formula

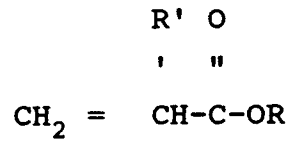

wherein -R is an alkyl group containing 2 to 8 carbon atoms, -R' is -H or - $CH_3$, and from 2 to 20 weight percent of units derived from acrylic acid or methacrylic acid wherein from 0 to 100 percent of the acid groups are neutralized with metal ions, and from 4 to 20 weight percent, based on the thermoplastic composition, of a copolymer of the class consisting of either (b) a copolymer having a Mooney viscosity of 40 to 60, consisting of 63 to 73 weight percent units derived from ethylene, 24 to 30 weight percent units derived from propylene, 3.0 to 6.5% by weight units derived from hexadiene, and 0 to 0.536 percent by weight units derived from nobornadiene, the copolymer being grafted with succinic anhydride groups in the amount of 0.25 to 2.25 weight percent of the copolymer; or (c) mixtures of (b) with the ungrafted copolymers of (b), such mixtures consisting of at least 35% by weight of (b) based on the sum of the weight of grafted and ungrafted copolymers of (b).

**2.** The composition of Claim 1 in which the metal ions used to neutralize the ionomer are selected from the class consisting of $Zn^{++}$, $Mg^{++}$, $Al^{+++}$, $Ca^{++}$, $K^{+}$, $Na^{+}$, and $Li^{+}$.

**3.** The composition of Claim 1 or Claim 2 in which the polyamide is an amorphous polyamide which is the reaction product of at least one aromatic dicarboxylic acid containing 8 to 18 carbon atoms and at least one diamine selected from the class consisting of 4-12 carbon normal aliphatic straight chain diamines, and 8 to 20 carbon cycloaliphatic diamines containing at least one cycloaliphatic ring.

**4.** The composition of Claim 3 in which the polyamide is the reaction product of isophthalic acid, terephthalic acid, and hexamethylenediamine.

**5.** The composition of Claim 3 in which the polyamide is the reaction product of isophthalic acid, terephthalic acid, hexamethylenediamine and bis(p-aminocyclohexyl)methane.

**6.** The composition of Claim 3 in which the reaction product consists of units derived from 2 to 10 mole percent units of bis(p-aminocylcohexyl)methane, and 90 to 98 mole per cent of hexamethylenediamine.

**7.** The composition of any one of Claims 1 to 6 in which the ionomer consists of from 70 to 85 weight percent ethylene, from 10 to 20 weight acrylate and from 5 to 15 weight percent acrylic acid or methacrylic acid.

**Patentansprüche**

**1.** Thermoplastische Masse mit hoher Schlagfestigkeit, wobei die genannte Masse eine Polyamidharz-Matrix enthält, das ein amorphes Polyamid enthält, wobei das genannte Polyamid eine scheinbare Schmelzviskosität von 300 $Ns/m^2$ (3000 poise) oder größer aufweist, wenn die Messung bei 280° C bei einer Schergeschwindigkeit von 100 $sec^{-1}$ durchgeführt wird, wobei das genannte Polyamid in der Masse in einer Menge von 75 bis 85 Gew.-% der Masse vorhanden ist und mindestens 15 Gew.-% der Masse Teilchen eines Schlagfestmachers ausmachen, die in der genannten Polyamidharz-Matrix dispergiert sind, wobei die genannten Teilchen des Schlagfest-machers, wie durch Kleinwinkel-Rötgenstrahlstreuung bestimmt, eine Teilchengröße von weniger als etwa 360 nm aufweisen, wobei die genannten Teilchen des Schlagfestmachers, bezogen auf die thermoplastische Masse, bestehen aus 5 bis 21 Gew.-% (a) eines ionomeren Terpolymeren bestehend aus 40 bis 93 Gew.-% Einheiten, die sich von Ethylen ableiten, mindestens 5 Gew.-% Einheiten, die sich von einem Acrylat der Formel

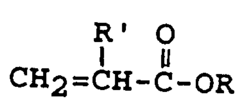

ableiten, worin -R eine Alkylgruppe mit 2 bis 8 Kohlenstoffatomen ist, R' für H oder $CH_3$ steht und aus 2 bis 20 Gew.-% Einheiten, die sich von Acryl- oder Methacrylsäure ableiten, worin 0 bis 100 % der

Säuregruppen mit Metallionen neutralisiert sind und, bezogen auf die thermoplastische Masse, aus 4 bis 20 Gew.-% eines Copolymeren der Klasse bestehend aus entweder (b) einem Copolymeren einer Mooney-Viskosität von 40 bis 60, bestehend aus 63 bis 73 Gew.-% Einheiten, die sich von Ethylen ableiten, 24 bis 30 Gew.-% Einheiten, die sich von Propylen ableiten, 3,0 bis 6,5 Gew.-% Einheiten, die sich von Hexadien ableiten und aus 0 bis 0,536 Gew.-% Einheiten, die sich von Nobornadien ableiten, wobei das Copolymer mit Bernsteinsäureanhydrid-Gruppen in einer Menge von 0,25 bis 2,25 Gew.-% des Copolymeren gepfropft ist; oder aus (c) Gemischen aus (b) mit den ungepfropften Copolymeren aus (b), wobei derartige Gemische aus mindestens 35 Gew.-% (b) bestehen, bezogen auf die Summe der Gewichte der gepfropften und ungepfropften Copolymeren aus (b).

**2.** Masse nach Anspruch 1, bei der die zur Neutralisierung des Ionomeren verwendeten Metallionen aus der Gruppe bestehend aus $Zn^{++}$, $Mg^{++}$, $Al^{+++}$, $Ca^{++}$, $K^{+}$, $Na^{+}$ und $Li^{+}$, ausgewählt sind.

**3.** Masse nach Anspruch 1 oder 2, bei der das Polyamid ein amorphes Polyamid darstellt, das das Reaktionsprodukt mindestens einer aromatischen, 8 bis 18 Kohlenstoff-atome enthaltenden Dicarbonsäure und mindestens eines Diamin, ausgewählt aus der Klasse bestehend aus 4-12 Kohlenstoffatome enthaltenden, normalen, aliphatischen, geradkettigen Diaminen und 8 bis 20 Kohlenstoffatome enthaltenden cycloaliphatischen Diaminen, die mindestens einen cycloaliphatischen Ring aufweisen, ist.

**4.** Masse nach Anspruch 3, bei der das Polyamid das Reaktionsprodukt von Isophthalsäure, Terephthalsäure Hexamethylendiamin ist.

**5.** Masse nach Anspruch 3, bei der das Polyamid das Reaktionsprodukt von Isophthalsäure, Terephthalsäure Hexamethylendiamin und Bis(p-aminocyclohexyl)-methan ist.

**6.** Masse nach Anspruch 3, bei der das Reaktionsprodukt aus Einheiten besteht, die sich von 2 bis 10 Mol-% Bis(p-aminocyclohexyl)-methan-Einheiten und 90 bis 98 Mol-% Hexamethylendiamin-Einheiten ableiten.

**7.** Masse nach einem der Ansprüche 1 bis 6, bei der das Ionomere aus 70 bis 85 Gew.-% Ethylen, 10 bis 20 Gew.-% Acrylat und 5 bis 15 Gew.-% Acryl- oder Methacrylsäure besteht.

**Revendications**

**1.** Une composition thermoplastique ayant une grande résistance au choc, ladite composition comprenant une résine polyamide de matrice qui comprend un polyamide amorphe, ledit polyamide ayant une viscosité apparente à l'état fondu de 300 Ns/m$^2$ (3000 poises) ou plus, telle que mesurée à 280 ° C à un taux de cisaillement de 100 s$^{-1}$, ledit polyamide étant présent dans la composition en une quantité de 75 à 85 % en poids de la composition, et, en une quantité d'au moins 15 % en poids de la composition, des particules d'agent de renforcement qui sont dispersées dans ladite résine polyamide de matrice, lesdites particules d'agent de renforcement ayant une taille inférieure à 360 nm environ telle que déterminée par diffusion des rayons X aux petits angles, lesdites particules d'agent de renforcement étant constituées par 5 à 21 pour cent en poids, sur la base de la composition thermoplastique, de (a) un terpolymère ionomère constitué de 40 à 93 pour cent en poids de motifs dérivés d'éthylène, au moins 5 pour cent en poids de motifs dérivés d'un acrylate de la formule

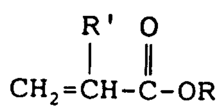

où -R est un groupe alkyle contenant 2 à 8 atomes de carbone, -R' est -H ou -$CH_3$, et 2 à 20 pour cent en poids de motifs dérivés d'acide acrylique ou d'acide méthacrylique où 0 à 100 pour cent des groupes acides sont neutralisés avec des ions métalliques, et par 4 à 20 pour cent en poids, sur la base de la composition thermoplastique, d'un copolymère de la classe formée soit par (b) un copolymère ayant une viscosité Mooney de 40 à 60, constitué de 63 à 73 pour cent en poids de motifs dérivés d'éthylène, 24 à 30 pour cent en poids de motifs dérivés de propylène, 3,0 à 6,5 % en poids de motifs dérivés d'hexadiène et 0 à 0,536 pour cent en poids de motifs dérivés de norbornadiène, le

copolymère étant greffé par des groupes anhydride succinique en une quantité de 0,25 à 2,25 pour cent en poids du copolymère, soit par (c) les mélanges de (b) avec les copolymères non greffés de (b), ces mélanges consistant en au moins 35 % en poids de (b) par rapport à la somme des poids des copolymères greffés et non greffés de (b).

**2.** La composition de la revendication 1, dans laquelle les ions métalliques utilisés pour neutraliser l'ionomère sont choisis dans la classe formée par $Zn^{++}$, $Mg^{++}$, $Al^{+++}$, $Ca^{++}$, $K^{+}$, $Na^{+}$ et $Li^{+}$.

**3.** La composition de la revendication 1 ou la revendication 2, dans laquelle le polyamide est un polyamide amorphe qui est le produit de réaction d'au moins un acide dicarboxylique aromatique contenant 8 à 18 atomes de carbone et d'au moins une diamine choisie dans la classe formée par les diamines à chaîne droite aliphatique normale de 4 à 12 atomes de carbone et les diamines cycloaliphatiques de 8 à 20 atomes de carbone contenant au moins un cycle cycloaliphatique.

**4.** La composition de la revendication 3, dans laquelle le polyamide est le produit de réaction d'acide isophtalique, d' acide téréphtalique et d'hexaméthylènediamine.

**5.** La composition de la revendication 3, dans laquelle le polyamide est le produit de réaction d'acide isophtalique, d'acide téréphtalique, d'hexaméthylènediamine et de bis(*p*-aminocyclohexyl)méthane.

**6.** La composition de la revendication 3, dans laquelle le produit de réaction consiste en motifs dérivés de 2 à 10 moles pour cent de bis(*p*-aminocyclohexyl)méthane et de 90 à 98 moles pour cent d'hexaméthylènediamine.

**7.** La composition de l'une quelconque des revendications 1 à 6, dans laquelle l'ionomère consiste en 70 à 85 pour cent en poids d'éthylène, 10 à 20 pour cent en poids d'acrylate et 5 à 15 pour cent en poids d'acide acrylique ou d'acide méthacrylique.